# EUROPÄISCHE PATENTSCHRIFT

(11) **EP 1 081 203 B1**
(45) Veröffentlichungstag und Bekanntmachung des Hinweises auf die Patenterteilung: **02.02.2005**
(21) Anmeldenummer: 00116647.9
(22) Anmeldetag: 02.08.2000
(51) Int. Cl.: C09J 11/06, C09J 107/00, C09J 121/00

(54) **Verwendung von Isocyanaten bei der Herstellung von hochviskosen selbstklebenden Massen**
Use of Isocyanates in the production of highly viscous self-sticking compositions
Utilisation des isocyanates pour la production de compositions autocollantes de haute viscosité

(30) Priorität: 18.08.1999 DE 19939078
(43) Veröffentlichungstag der Anmeldung: 07.03.2001
(73) Patentinhaber: tesa AG, 20253 Hamburg (DE)
(72) Erfinder: Burmeister, Axel, 21244 Buchholz (DE); Hansen, Sven, 20255 Hamburg (DE); Leydecker, Heiko, 23730 Neustadt/Holstein (DE); Kreft, Christian, 20255 Hamburg (DE); Stähr, Jochen, 30179 Hannover (DE)

(56) Entgegenhaltungen:
- DE-A- 1 935 684
- US-A- 5 760 135
- DATABASE WPI Section Ch, Week 199011 Derwent Publications Ltd., London, GB; Class A18, AN 1990-080389 XP002152949 & JP 02 034680 A (HITACHI CHEM CO LTD), 5. Februar 1990 (1990-02-05)

## Beschreibung

Die vorliegende Erfindung bezieht sich auf die Verwendung von Isocyanaten zur chemisch/thermischen Vernetzung von druckempfindlichen Schmelzhaftklebern (pressure sensitive adhesives, PSA) auf Basis nicht-thermoplastischer Elastomerer, wie zum Beispiel Naturkautschuk, unter Verwendung von klebrigmachenden Harzen, gegebenenfalls Füllstoffen und Weichmachern.

Die in den letzten Jahren entwickelten Schmelzhaftkleber auf der Polymerbasis nicht-thermoplastischer Elastomerer, wie zum Beispiel Naturkautschuk oder anderer hochmolekularer Kautschuke, weisen ohne Vernetzungsschritt nach der Beschichtung eine für die meisten Anwendungen ungenügende Kohäsion auf. Diese äußert sich in mangelnder Scherfestigkeit der so gefertigten selbstklebenden Bänder und kann sogar zur Ausbildung von störenden Kleberrückständen führen, welche eine gewünschte rückstandsfreie Wiederablösbarkeit nach dem Gebrauch unmöglich machen.

Dieser Mangel verhinderte über lange Jahre hinweg den Einsatz von Schmelzhaftklebern auf der Basis von Naturkautschuk in den traditionell stark von Naturkautschuk dominierten Einsatzgebieten von Selbstklebebändern, wie den Masking Tapes oder den Verpackungsklebebändern.

Die bisher für Schmelzhaftkleber auf Basis nicht-thermoplastischer Elastomerer eingesetzten Vernetzungsverfahren mittels ionisierender Strahlung (Elektronenstrahlen = ESH oder Ultraviolettes Licht = UV) erfordern das Vorhandensein von entsprechenden kostenintensiven Anlagen wie Strahlenquellen und aufwendigen Schutzeinrichtungen, zumal bei größeren Schichtdicken.

Darüber hinaus ist die UV-Vernetzung bei vielen üblichen Bestandteilen wie Füllstoffen, nicht transparenten Harzen und Pigmenten sowie im Falle dicker Kleberschichten nur äußerst begrenzt einsetzbar.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, sowie Verfahren der Herstellung, der Beschichtung und der Vemetzung von Schmelzhaftklebem auf Basis nicht-thermoplastischer Elastomerer werden auch in den Patenten WO 94 11 175 A1, WO 95 25 774 A1, WO 97 07 963 A1 und entsprechend US 5,539,033, US 5,550,175 sowie EP 0 751 980 B1 und EP 0 668 819 B 1 ausführlich dargestellt.
Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlvernetzung (ESH) unumgänglich, ebenso wie den Einsatz von reaktiven Substanzen als ESH-Promotoren zum Erzielen einer effektiven Vemetzungsausbeute.

Beide Verfahrensschritte sind in den genannten Patenten beschrieben, die gewählten ESH-Promotoren neigen aber auch zu unerwünschten chemischen Vemetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vernetzung der Klebmassen geeignet sind, wie zum Beispiel reaktiver (optional halogenierter) Phenolharze, Schwefel- oder Schwefelabspaltender Vernetzersysteme, weil es wegen der im Prozeß einsetzenden chemischen Vernetzungsreaktionen zu so erheblicher Viskositätserhöhung kommt, daß die resultierende Haftklebemasse ihre Streichfähigkeit einbüßt.

In der Patentanmeldung JP 95 278 509 wird ein Selbstklebeband offenbart, bei dessen Herstellung Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat- oder Terpen-Harzen zu erhalten, die zwischen 140 °C und 200 °C mit einer Streichviskosität von 10 bis 50 x 10³ cps gut verarbeitbar ist, anschließend jedoch eine extrem hohe ESH-Dosis (40 Mrad) erfordert, um die für den Gebrauch notwendige Scherfestigkeit zu erhalten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Nachteil der in den zitierten Dokumenten beschriebenen Vernetzungstechnologien (im wesentlichen ESH-Bestrahlung) ist neben der notwendigen Investition auch die Schädigung bestimmter empfindlicher Träger durch Elektronenstrahlen. Dieses kommt besonders im Falle von Papierträgem, Zellwollgeweben, silikonisierten Trennpapieren, vor allem aber im Falle von weitverbreiteten Folienmaterialien wie Polypropylen durch Verschlechterung der Reißdehnungseigenschaften zum Ausdruck.

Viele handelsübliche PVC-Folien neigen außerdem unter ESH-Bestrahlung zu Verfärbungen, welche sich bei hellen oder transparenten Folienqualitäten nachteilig auswirken.

Weiterhin werden viele der bei der Klebebandherstellung üblichen Releaselacke durch Elektronenbestrahlung geschädigt und damit in ihrer Wirkung beeinträchtigt. Dies kann im Extremfall zur Nichtabrollbarkeit von Klebebandrollen oder zur Nichtwiederverwendbarkeit von im Klebebandherstellungsprozeß benötigten Transfer-Trennpapieren führen.

Einige Synthesekautschuke wie Polyisobutylen (PIB), Butylkautschuk (IIR) und halogenierter Butylkautschuk (XIIR) schließlich sind einer Elektronenstrahlenvernetzung nicht zugänglich und bauen unter Bestrahlung ab.

Ein Weg zur Minimierung dieser Nachteile besteht in der Verwendung von bestimmten Substanzen, welche die benötigte Strahlendosis und damit die Begleitschäden mindern. Eine Reihe solcher Substanzen sind als ESH-Promotoren bekannt. Allerdings können ESH-Promotoren auch zu unerwünschten chemischen Vernetzungsreaktionen unter erhöhten Temperaturen neigen, dies begrenzt die Auswahl der für die Schmelzhaftkleberherstellung brauchbaren ESH-Promotoren und limitiert darüber hinaus den Einsatz bestimmter klebrigmachender Harze. Diese Restriktionen und bestimmte vorteilhafte Kombinationen von ESH-Promotoren und nichtvemetzenden phenolischen Klebharzen sind Gegenstand insbesondere der Schrift WO 97/07963.

Der Einsatz von nicht-thermoplastischen Elastomeren wird ferner beschrieben in JP 95 331 197, wobei Naturkautschuk mit einem mittleren Molekulargewicht (Gewichtsmittel) M_{w} < 1 Million g/mol mit aliphatischen, nichtreaktiven Kohlenwasserstoffharzen Verwendung findet, der mit blockierten Isocyanaten abgemischt, bei 150 °C fünf Minuten lang vorvernetzt und nach anschließendem Ausstreichen auf PET-Folie bei 180 °C mehrere Minuten (zum Beispiel 15 Minuten) lang ausgehärtet wird.

Nachteil dieses Verfahrens ist einesteils das bei der Vernetzungsreaktion freiwerdende Blockierungsmittel, welches einerseits, wenn es in der Klebemasse verbleibt, die Klebeigenschaften des Bandes in vielerlei Hinsicht beeinträchtigen kann, und andrerseits beim Ausdampfen zu Beschichtungsdefekten wie Porositäten führt und aufwendige Technik zur Absaugung und Entfernung dieser Blockierungsmittel nötig macht.

Von besonderem Nachteil ist aber die hohe Vernetzungstemperatur, welche temperaturempfindliche Träger wie viele Folien und Schäume prinzipiell ausschließt und im Falle von Papierträgern und Trennpapieren zur Versprödung führen kann.

Zusammenfassend kann festgestellt werden, dass zur Vernetzung der bekannten Schmelzhaftkleber auf Basis nicht-thermoplastischer Elastomerer entweder schädlich hohe Strahlendosen oder aber schädlich hohe Temperaturen bei langen Vernetzungszeiten benötigt werden und beides bei einer Vielzahl der üblichen Trägermaterialien Schädigungen zur Folge hat.

Aufgabe der Erfindung ist es, hier Abhilfe zu schaffen und die ökonomischen Vorteile der lösemittelfreien Fertigung von Schmelzhaftklebern auf Basis nichtthermoplastischer Elastomerer mit den chemisch-thermischen Vernetzungsmöglichkeiten der konventionellen Lösemitteltechnologie für dicke, auch gefüllte und eingefärbte Klebemassen mit hohen Schichtdicken auf strahlen- und temperaturempfindlichen Trägermaterialien zu verbinden.

Gelöst wird diese Aufgabe durch die Verwendung von einem oder mehreren blockierungsmittelfreien polyfunktionellen Isocyanaten zur Herstellung eines Schmelzhaftklebers, wie sie im Hauptanspruch näher gekennzeichnet ist. Gegenstand der Unteransprüche sind vorteilhafte Fortführungen des Erfindungsgegenstandes.

Demgemäß beschreibt die Erfindung die Verwendung von einem oder mehreren blockierungsmittelfreien polyfunktionellen Isocyanaten zur Herstellung eines Schmelzhaftklebers auf der Basis eines oder mehrerer nicht-thermoplastischer Elastomerer, mindestens bestehend aus:
- 100 Masseteilen des oder der nicht-thermoplastischen Elastomerer,
- 1 bis 200 Masseteilen eines oder mehrerer klebrigmachender Harze, wobei der Schmetzhaftkleber 8 Millimol bis 5 mol der reaktiven Isocyanatgruppen des Isocyanates pro Kilogramm des oder der verwendeten nicht-thermoplastischen Elastomere enthält.

Vorzugsweise weist das Elastomer beziehungsweise das Elastomergemisch eine mittlere Molmasse von 300.000 bis 1,5 *10⁶ g/mol auf, wobei der Wert mit einer GPC-Messung als Gewichtsmittel bestimmt wird.
Bei der GPC-Messung (Gelpermeationschromatographie, eine als Säulenchromatographie durchgeführte Flüssigkeitschromatographie) wird eine flüssige Phase mit dem gelösten Polymeren durch ein Gel gegeben. Kleinere Moleküle des Gelösten können in alle Poren eindringen (diffundieren), ihnen steht das gesamte Volumen der mobilen Phase in der Trennsäule zur Verfügung. Aus diesem Grund werden sie länger in der Säule zurückgehalten als die größeren Moleküle. Solche Moleküle, die größer sind als die größten Poren des gequollenen Gels, können die Gelkömer nicht durchdringen und wandem an diesen vorbei; sie verlassen die Säule zuerst. Die Moleküle erscheinen daher im Eluat in der Reihenfolge abnehmender Molekülgröße. Da die Molekülgröße im allgemeine der Molmasse proportional ist, bietet die Gelchromatographie die Möglichkeit zu Trennung und Reinigung von Substanzen verschiedener Molmassen und zur Molmassenbestimmung.

Weiter vorzugsweise zeigt der Schmelzhaftkleber in unvernetztem Zustand eine komplexe Viskosität von 10.000 bis 300.000 Pa*s bei 0,1 rad/s und 110 °C, bevorzugt 30.000 bis 170.000 Pa*s bei 0,1 rad/s und 110 °C, ganz besonders 40.000 bis 140.000 Pa*s bei 0,1 rad/s und 110 °C.

Die nicht-thermoplastischen Elastomere sind vorteilhafterweise ausgewählt aus der folgenden Gruppe, und zwar einzeln oder in beliebiger Mischung:
- Naturkautschuke
- statistisch copolymerisierte Styrol-Butadien-Kautschuke (SBR)
- Butadien-Kautschuke (BR)
- synthetische Polyisoprene (IR)
- Butyl-Kautschuke (IIR)
- halogenierte Butyl-Kautschuke (XIIR)
- Etylen-Vinylacetat-Copolymeren (EVA)
- Polyurethane.

In einer weiteren vorteilhaften Weiterbildung der Erfindung umfaßt der Schmelzhaftkleber einen Polymerblend von einem oder mehreren der nicht- thermoplastischen Elastomeren und einem oder mehreren thermoplastischen Elastomeren, wobei letztere wieder ausgewählt werden können aus anschließenden Aufzählung, und zwar einzeln oder in beliebiger Mischung:
- Polypropylene
- Polyethylene
- metallocen-katalysierte Polyolefine
- Polyester
- Polystyrole
- Blockcopolymeren-Synthesekautschuke

Als reaktive, nicht blockierte Isocyanate können sowohl blockierungsmittelfreie aliphatische als auch blockierungsmittelfreie aromatische Isocyanate eingesetzt werden, wobei zuzüglich das blockierungsmittelfreie Isocyanat aus einem Gemisch unterschiedlicher Isocyanate bestehen kann, welche sich durch unterschiedliche Reaktivitäten auszeichnen.

Als Isocyanate, die zum Einsatz kommen können, sind folgende zu nennen, wobei die Aufzählung nicht als abschließend zu verstehen ist.
- Toluendiisocyanat (TDI)
- Diphenylmetahndiisocyanat (MDI)
- Hexamethylendiisocyanat (HDI)
- Isophorondiisocyanat (IPDI)
- Bis(4-Isocyanatcyclohexyl)methan (PICM / H₁₂*MDI)

Beispielhaft seien weiterhin erwähnt:
- Zusatzmittel TI, Bayer AG (Toluolsulfonyl-NCO)
- Desmodur CD, Bayer AG
- Vestanat IPDI, Hüls AG (Isophorondi-NCO)
- Vestanat T 1890/100, Hüls AG (Poly-NCO)
- TMI, Cytec Industries B.V
- Voranate M 220, Dow Chemical Europe (Diphenylmethandiisocyanat)
- Desmodur RFE, Bayer AG
- TMXDI (meta), Cytec Industries B.V (TMXDI)
- Desmodur TT, Bayer AG (TDI)

Die Vernetzungreaktion kann in der üblichen Weise auf dem offenen Band in Kanalanlagen bei geeigneter Temperaturführung erfolgen.
Weiterhin können die in der Klebebandproduktion oft genutzten Temperprozesse, wie sie beispielsweise zur Entspannung von Folienmaterialien nötig sind, für die Vernetzung der Schmelzhaftkleber genutzt werden oder die Vernetzung kann bei Raumtemperatur auf dem Band erfolgen. In einer besonders vorteilhaften Ausführungsform wird die Vernetzung nicht nur mittels Temperatur und Verweilzeit geregelt, sondern auch über die Zugabe von Katalysatoren, wie sie für die PU- Chemie bekannt sind und unter anderem in Catalysis in aliphatic isocyanat alcohol reactions" [ "Modern paint coating" Bd 77 1987 Heft 6 Seite 28- 32 und S. 35 ] beschrieben ist.
In allen Fällen entfallen Trägerschädigungen durch hohe Strahlendosen oder durch hohe Vernetzungstemperaturen sowie Defekte in Beschichtungsbild oder Funktion der so vernetzten Schmelzhaftkleber.

Um eine Beschleunigung der Vernetzung herbeizuführen, kann das besagte blockierungsmittelfreie Isocyanat des Schmelzhaftklebers mittels eines Katalysator versetzt werden, so zum Beispiel Dibutyzinnlaurat.

Prinzipiell geeignet sind eine Vielzahl weiterer Katalysatoren. Die folgende Tabelle stellt eine mögliche Auswahl an Katalysatoren dar, wobei diese Tabelle nicht als abschließend zu betrachten ist. Vielmehr stellt es den Fachmann vor keinerlei Schwierigkeiten auch andere als die hier explizit erwähnten Stoffe einzusetzen.

**Tabelle:**

| Übersicht über die einzusetzenden Katalysatoren |
|---|
| Stannanoctoat |
| Dibutylzinn-Dilaurat (DBTDL) |
| Manganoctoat |
| Zirconiumoctoat |
| Cobaltoctoat |
| Bleioctoat |
| Bismutstannat |
| Bleistannat |
| Zirconiumoctoat |
| Zinkoctoat |
| Dibutylzinn-Bis-O-Phenylphenat |
| Dibutylzinn-S,S-Dibutyldithio-carbonat |
| Triphenylantimondichlorid |
| Dibutylzinnmaleat |
| Stannanoxalat |
| Stannanstearat |
| Bariumnitrat |
| Cadmiumoctoat |
| Dibutylzinndiacetat |
| Dibutylzinndilaurylthiolat |
| Diaza(2.2.2)bicyclooctan (DABCO Katalysator) |
| DBTDL und DABCO Katalysator 1:1 |
| Bismutstearat |
| Bleistearat |
| Dimethlyzinndichlorid (DMTDC) |
| Stannannapthenat |

Als Octoate (unsystematische Bezeichnung für die Octanoate (Octanate, Caprylate)) werden die Ester und Salze der Octansäure bezeichnet. In der Technik versteht man jedoch unter Octoat im allgemeinen die Metallsalze der 2-Ethylhexansäure. Die als Metallseifen und Trockenstoffe verwendeten Octoate sind geruchschwach, leichter kontrollierbar als zum Beispiel die Naphthenate und beschleunigen auch die Trocknung in feuchter Atmosphäre. Als Sikkative werden zum Beispiel Ca-, Zn-, Mn-, Co- und Pb-Octoat verwendet. Ba-Octoat ist ein Stabilisator für PVC. Li-, Mg-, Ca- und Al-Octoat dienen zur Herstellung von Mineralöl-Schmierstoffen. Al-Octoat eignet sich auch zum Gelieren von leichten Kohlenwasserstoffen für Kosmetika. Ni-Octoat und Cu-Octoat werden als öllösliche Fungizide empfohlen. Ca-Octoat als Bezugssubstanz in der Atomabsorptionsspektroskopie; Fe-Octoat als Verbrennungskatalysator für flüssige Brenn- u. Treibstoffe, Na- und K-Octoat bei der Herstellung wasserlöslicher Penizilline (Quelle: Römpp Lexikon Chemie - Version 1.5, Stuttgart/New York: Georg Thieme Verlag 1998).

Dem Schmelzhaftkleber können Füllstoffe zugesetzt sein, die insbesondere ausgewählt werden können aus der Gruppe der Metalloxide, Kreiden, besonders bevorzugt der Kreiden mit spezifischen Oberflächen von 3 bis 20 m²/g, gefällter oder pyrogener Kieselsäuren, besonders bevorzugt der Kieselsäuren mit spezifischen Oberflächen von 20 bis 250 m²/g, bevorzugt 40 bis 200 m²/g, Voll- oder Hohlglaskugeln, besonders bevorzugt der Voll- oder Hohlglaskugeln mit dem mittleren Durchmesser von 3 bis 200 µm, bevorzugt 5 bis 135 µm, der Mikroballons, der Ruße, besonders bevorzugt der Ruße mit spezifischen Oberflächen von 20 bis 120 m²/g, und/oder der Glas- oder der Polymerfasern.
Ebenso können die oberflächenmodifizierten Varianten der oben aufgeführten Füllstoffe Verwendung finden.

Bei den Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet. Als niedrigsiedende Flüssigkeit kommen Kohlenwasserstoffe wie die niederen Alkane, beispielsweise Pentan, als verflüssigtes Gas Chemikalien wie Isobutan in Frage.
Besonders vorteilhafte Eigenschaften zeigen sich, wenn es sich bei den Mikroballons um solche handelt, die bei 25 °C einen Durchmesser aufweisen von 3 µm bis 40 µm, insbesondere 5 µm bis 20 µm.
Durch Wärmeeinwirkung dehnen sich die Kapseln irreversibel aus und expandieren dreidimensional. Die Expansion ist beendet, wenn der Innen- und Außendruck sich ausgleichen. So erzielt man einen geschlossenzelligen Schaumträger, welcher sich durch gutes Auffließverhalten und hohe Rückstellkräfte auszeichnet.

Nach der thermischen Expansion aufgrund erhöhter Temperatur weisen die Mikroballons vorteilhafterweise einen Durchmesser von 20 µm bis 200 µm, insbesondere 40 µm bis 100 µm, auf.
Die Expansion kann dabei vor oder nach dem Einarbeiten in die Polymermatrix erfolgen, aber auch vor oder nach dem Einarbeiten in die Polymermatrix und dem Ausformen.

Möglich ist, auch die Expansion nach dem Einarbeiten in die Polymermatrix und vor dem Ausformen vorzunehmen.

Die Füllstoffe sollten einzeln oder in beliebiger Kombination in Anteilen von 1 bis 100 bezogen auf 100 Anteile Elastomerer zugestzt werden.

Die Füllstoffe sollten einzeln oder in beliebiger Kombination in Anteilen von 1 bis 300 bezogen auf 100 Anteile Elastomerer zugestzt werden.

Weiterhin vorteilhaft ist die Zumischung von Weichmachern in den Schmelzhaftkleber, die wiederum insbesondere ausgewählt aus der Gruppe der paraffinischen oder naphthenischen Öle, besonders bevorzugt der paraffinischen oder naphthenischen Öle mit kinematischen Viskositäten bei 20 °C zwischen 40 und 255 mm²/s, der oligomeren Nitrilkautschuke, besonders bevorzugt der flüssigen Nitrilkautschuke mit ACN-Gehalt von 20 bis 40 Gew.-%, besonders 20 bis 35 Gew.-%, der flüssigen Isoprenkautschuke, besonders bevorzugt der Isoprenkautschuke mit Molmassen zwischen 10000 und 70000 g/mol, der Oligobutadiene, besonders bevorzugt der Oligobutadiene oder funktionalisierten Oligobutadiene mit Molmassen von 1.500 bis 70.000 g/mol, der Weichharze, besonders bevorzugt der Weichharze mit Molmassen von 100 bis 2000 g/mol, besonders 250 bis 1700 g/mol, der Wollfette und/oder der Raps- und Rhizinusöle.

Verwendung finden kann der erfindungsgemäße Schmelzhaftkleber zur Herstellung eines selbstklebenden Artikels, indem dieser auf ein bahnförmiges Material, zum Beispiel ein beidseitig antiadhäsiv beschichtetes Material, zumindest einseitig aufgetragen wird, wobei der Schmelzhaftkleber mit einem bevorzugtem Masseauftrag von 5 bis 3000 g/m², besonders bevorzugt von 10 bis 200 g/m² beschichtet wird.

Bei dem bahnförmigen Material handelt es sich insbesondere um einen einseitig oder beidseitig beschichtetem Papierträger oder einen einseitig oder beidseitig beschichtetem Polymerfolienträger, wobei der Masseauftrag zwischen 5 bis 200 g/m² und besonders von 10 bis 100 g/m² liegen kann.

Überraschenderweise kann gegenüber den mit den vorbekannten Strahlentechniken vernetzten Schmelzhaftklebermassen eine signifikante Verbesserung der Verankerung der erfindungsgemäß isocyanatvernetzten Schmelzhaftklebermassen auf handelsüblichen ungeprimerten Folien festgestellt werden, insbesondere wenn es sich um vergleichsweise unpolare Folien wie z. B. Polypropylen oder Polyethylen handelt und wenn diese chemisch mittels handelsüblichen Primern oder physikalisch mittels üblichen Beflammungstechniken oder Coronabehandlung vorbehandelt werden.

Weiterhin können als Träger Gewebe oder Vliese aller Art eingesetzt werden.

Verfestigte Vliese werden beispielsweise auf Nähwirkmaschinen des Typs "Malivlies" der Firma Malimo hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer, ehemals Malimo, schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Oberals auch auf der Unterseite verfestigt ist.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von textilen Fäden. Für diesen Typ Vlies sind Nähwirkmaschinen des Typs "Maliwatt" der Firma Karl Mayer, ehemals Malimo, bekannt.

Als Ausgangsmaterialien für den textilen Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasern zur Herstellung des Vlieses eingesetzt werden.

Genadelte, naßgelegte beziehungsweise luft- und/oder wasserstrahlverfestigte Vliese können beispielsweise bei der Firma Freudenberg bezogen werden.

Als besonders geeignet zeigen sich dabei Dicken des Schmelzhaftklebers auf dem bahnförmigen Material zwischen 5 µm und 3000 µm, vorzugsweise zwischen 15 µm und 150 µm.

Darüber hinaus kann der Schmelzhaftkleber auf einem beidseitig antiadhäsiv beschichtetes Trennpapier in einer Dicke aufgetragen sein von 20 µm bis 3000 µm, besonders 40 µm bis 1500 µm.

Ein besonders geeignetes Verfahren zur Herstellung von den oben dargelegten selbstklebenden Artikeln, insbesondere zur Herstellung hochleistungsfähiger selbstklebender Artikel wie Bänder oder Etiketten, besteht darin, die Beschichtung des Schmelzhaftklebers mit Hilfe eines Mehrwalzenauftragswerkes durchzuführen, das zwei bis fünf Walzen aufweist.

### Beispiele

Die folgenden Beispiele sollen die erfindungsgemäße Verwendung von Isocyanaten zur chemischen Vernetzung von Naturkautschuk-Schmelzhaftklebern illustrieren, ohne die Erfindung einzuschränken.

Die eingesetzten Prüfmethoden sind im folgenden kurz charakterisiert:

Die klebtechnischen Prüfungen der Klebebandmuster wurden jeweils nach 24 h Lagerzeit bei Raumtemperatur und vergleichend je nach Beispiel nach 7-tägiger Temperung bei 70 °C oder 40 °C durchgeführt, wobei die getemperten Muster zusätzlich vor den Messungen zwecks Vergleichbarkeit der Meßergebnisse 24h bei 23 °C und 50 % Luftfeuchtigkeit gelagert wurden.

### Prüfmethode 1: Bestimmung des Zugdehnverhaltens von Folien

Die Prüfung erfolgte gemäß der standardisierten Methoden:

| | |
|---|---|
| Reißkraft | DIN EN 1940 / AFERA 4004 |
| Reißdehnung | DIN EN 1941 / AFERA 4005 |

### Prüfmethode 2: Klebkraft

Die Klebkraft (Schälfestigkeit) der Klebebandmuster wurde nach AFERA 4001 bestimmt. Sinkende Klebkraftwerte sind im allgemeinen ein Zeichen für zunehmenden Vernetzungsgrad des Schmelzhaftklebers.

### Prüfmethode 3: Scherfestigkeit

Die Scherfestigkeit der untersuchten Klebebandmuster wurde nach PSTC 7 (Holding Power) bestimmt Alle angegebenen Werte wurden bei Raumtemperatur und der angegebenen Belastung von 20 N mit einer Verklebungsfläche von 20x13 mm² bestimmt. Die Ergebnisse sind in Minuten Haltezeit angegeben.

Ein Anstieg der Scherstandzeiten bedeutet im untersuchten Bereich für ein- und dieselbe Schmelzhaftkleberrezeptur einen höheren Vernetzungsgrad beziehungsweise eine höhere Kohäsion.

Im weiteren Sinne muß auch die Betrachtung der Versagensart erfolgen, wobei gilt:
- untervernetzte (schwach kohäsive) Schmelzhaftkleber: kurze Scherstandzeiten bei köhäsivem Versagen
- optimal vernetzte Schmelzhaftkleber: lange Scherstandzeiten
- übervernetzte (zu kohäsive) Schmelzhaftkleber: kurze Scherstandzeiten durch adhäsives Versagen

### Prüfmethode 4: Gelgehalt

Der Vemetzungsgrad des bereits beschichteten Naturkautschuk-Schmelzhaftklebers wurde auf dem fertigen Klebeband durch den Gelgehalt des Schmelzhaftklebers bestimmt. Hierzu wurden Klebebandproben in Stücken von 20 cm² ausgestanzt und in einem Beutel aus Polyethylen-Spinnvlies (Tyvek der Firma Du Pont mit einem Flächengewicht von ca. 55 g/cm²) eingeschweißt. Die Muster wurden 3 Tage unter Schütteln bei Raumtemperatur mit Toluol extrahiert. Das Toluol wurde täglich gewechselt. Nach erfolgter Extraktion wurde das Toluol gegen Hexan/Heptan ausgetauscht und die Proben bei 110 °C getrocknet. Der Gelanteil wurde durch Differenzwägungen bestimmt, wobei die Extraktionsverluste des Spinnvlieses und des Trägers berücksichtigt wurden.
Das Ergebnis wird als Gelwert in Prozent, wobei das anfangs unvemetzte Elastomere zu 100 % gesetzt wird, angegeben.

### Prüfmethode 5: Quelltest

In einer vereinfachten Prozedur konnte der Vernetzungsgrad des Schmelzhaftklebers auf der Polymerbasis nicht-thermoplastischer Elastomerer auch vergleichend aus Quellungsmessungen bestimmt werden.
Hierzu wurde ein Klebebandstreifen für 10 Minuten in Siedegrenzenbenzin 60/95 gelegt und anschließend visuell und mechanisch mit einem Spatel auf Vorhandensein und auf Konsistenz des auf dem Band verbleibenden gequollenen Schmelzhaftkleber-Geles untersucht.
Das Ergebnis wird als "Quelltest" angegeben und umfaßt eine Skala von 0 bis 6.

Es bedeuten:

| Quelltestnote | Gelkonsistenz bei Quelltest | Entspricht Gelgehalt nach Methode 4 [%] |
|---|---|---|
| 0 | Masseschicht auflösend und schlammig d.h. Vernetzung nicht erkennbar | 0 - 5 |
| 1 | Starkes Quellen, Masse stark schleimig und selbstablaufend d.h. sehr geringe Vernetzung | 5 - 15 |
| 2 | Starkes Quellen, Masse schleimig und leicht abschiebbar | 15 - 25 |
| 3 | Gutes Quellen, Masse weniger schleimig und abschiebbar | 25 - 35 |
| 4 | Schwaches Quellen, Masse kaum schleimig, noch abschiebbar | 35 - 45 |
| 5 | Kaum Quellen, Masse fast schichtbeständig und kaum abschiebbar | 45 - 55 |
| 6 | Kein Quellen, Masse schichtbeständig und nur abkratzbar | > 55 |

Die optimale Balance von Kohäsion und Adhäsion, ausgedrückt durch die Quelltestnote des jeweiligen Haftklebers, hängt von der Anwendung des konkreten Klebebandes ab. Für Allzweck-Maskierbänder beträgt die optimale Quelltestnote beispielsweise 2-3, für Hochtemperatur-Maskierbänder mit Temperaturbeständigkeiten größer 140 °C beträgt die optimale Quelltestnote 4-5.

### Prüfmethode 6: Viskoelastische Eigenschaften von Schmelzhaftklebern

Schließlich läßt sich der Vernetzungsgrad eines gegebenen Schmelzhaftklebers sehr einfach aus der Messung seiner viskoelastischen Eigenschaften bestimmen. Die Bewertung dieser Meßergebnisse erfordert jeweils den Vergleich mit dem unvernetzten Zustand des Schmelzhaftklebers, da die Rezeptur hier starken Einfluß auf die absoluten Meßwerte hat. Als Vernetzungsmaß können sowohl das Verhältnis der Viskosität der vernetzten Masse zu der Viskosität der unvernetzten Masse als auch das entsprechende Verhältnis der Verlustwinkel, üblicherweise ausgedrückt als tan δ, angegeben werden.

Zur Bestimmung der viskoelastischen Eigenschaften von Schmelzhaftklebem wurden dynamisch-mechanische Messungen in Torsionsrheometem durchgeführt, wobei oszillierende Verformungen vorgegeben und resultierende Schubspannungen gemessen wurden.

In den Beispielen wurde ein Gerät des Typs RDA II benutzt (Rheometric Dynamic Analyzer II der Rheometric Scientific GmbH, ein Torsionsrheometer mit Platte/Platte-Meßsystem). In das Meßsystem wurde eine präparierte, plane, blasenfreie Probe des Schmelzhaftklebers von 1,5 mm Schichtdicke eingebracht. Die Messung erfolgte im Temperaturbereich von -50 °C bis +200 °C und einem Frequenzbereich von 0,1 rad/s bis 100 rad/s bei konstanter Normalkraft von 150g. Die Meßwerterfassung erfolgte rechnergestützt, die viskoelastischen Eigenschaften (Speichermodul G', des Verlustmodul G'', Verlustwinkel tan δ, komplexe Viskosität η*) des Schmelzhaftklebers wurden für die angegebenen Temperatur- und Frequenzbereiche in üblicher Weise aus Höhe und Zeitverlauf der gemessenen Schubspannungen ermittelt.

Messungen dieser Art können sowohl an präparierten Schmelzhaftkleberproben als auch an vollständigen Klebebändern durchgeführt werden, wobei in letzterem Falle Klebebandproben bis zum Erreichen der geeigneten Schichtdicke aufeinander laminiert werden müssen und die Trägerseite der obersten Schicht mit Hilfe eines geeigneten Konstruktivklebers an der entsprechenden Platte des Meßsystems befestigt werden muß.

### Prüfmethode 7: Verarbeitungsviskosität des Schmelzhaftklebers

Um schnelle Aussagen über die viskoelastische Eigenschaften eines Schmelzhaftklebers, insbesondere des Abbau- beziehungsweise Vernetzungsgrades des Gerüstpolymeren während der Fertigung zu erhalten, wurden dynamisch-mechanische Messungen gemäß oben beschriebener Prüfmethode 6 im Frequenzbereich 0,1 rad/s bis 100 rad/s bei konstanter Normalkraft von 150g durchgeführt, die Meßtemperatur jedoch konstant bei 110 °C belassen. Die Schmelzhaftkleberproben wurden im Meßsystem vor der Messung 7 min bei 110 °C vortemperiert.

Der Wert der komplexen Viskosität bei einer Frequenz von 0,1 rad/s und einer Temperatur von 110 °C gibt bei identischer Rezeptur und identischen Molmassen des Elastomeren Aufschluß über die Kohäsivität beziehungsweise Vemetzungsgrades der Selbstklebemasse.

Zur Quantifizierung des Vernetzungsgrads
Es wird die Vernetzungszahl VZ als Verhältnis der jeweiligen komplexen Viskosität der vernetzten Schmelzhaftkleberrezeptur zur komplexen Viskosität der unvernetzten Schmelzhaftkleberrezeptur eingeführt:
- VZ: Viskosität des vernetzten Schmelzhaftklebers / Viskosität des unvernetzten Schmelzhaftklebers.

### Prüfmethode 8: Molmassenbestimmung mittels Gelpermeationschromatographie

Die Molmassen des in den Naturkautschuk-Schmelzhaftklebem enthaltenen Elastomeranteils wurden ausschließlich an unvernetzten Schmelzhaftkleberproben bestimmt, die Molmassenbestimmung erfolgte mittels GPC an Polystyrolstandard mit folgendem Meßsystem:

| | |
|---|---|
| Eluent | Tetrahydrofuran (THF) p.a. |
| Säulen | PSS-SDV, 5µm 103 Å, ID 8.0 mm × 300 mm |
| Vorsäule | PSS-SDV, 5µm 105 Å, ID 8.0 mm × 300 mm PSS-SDV, 5µm 106 Å, ID 8.0 mm × 300 mm |
| Pumpe | TSP P200 |
| Fluß | 1.0 ml/min |
| Injektionssystem | TSP AS3000 mit 100 ml Injektionsvolumen |
| Temperatur | 25 °C |
| Detektoren | TSP UV 2000 UVNIS Detektor bei 254 nm Shodex Differentialfraktionmeter RI 71 |
| Auswertung | PSS- WinGPC Version 4.02 |

### Beispiel 1

### Schädigung einer BOPP-Folie durch Elektronenbestrahlung (ESH)

Eine biaxial orientierte Polypropylenfolie (35 µm BOPP Film der Fa. Pao Yan, Taipeh) mit einer Standardprimerung, beschichtet mit 20 µm einer Selbstklebemasse auf Naturkautschukbasis für die Anwendung als Verpackungsklebeband, wurde mit einer Elektronenstrahldosis von 5 kGy bei einer Beschleunigungsspannung von 150kV beaufschlagt und anschließend in Streifenform zentrisch unter einer in 50 cm Höhe angebrachten UV-Lampe (OSRAM ULTRAVITALUX® mit 300 Watt Leistung) gelagert.
Eine nicht bestrahlte Klebebandprobe wurde derselben UV-Lagerung unterworfen. Nach der UV-Lagerung wurden die Zugdehnungs-Kennwerte, nämlich die Höchstzugkraft und die maximale Reißdehnung der BOPP-Folien gemäß Prüfmethode 1 bestimmt.

Nach 20 h UV-Belichtung fielen die Zugdehnungs-Kennwerte der bestrahlten BOPP-Folien im Vergleich zur nicht bestrahlten BOPP-Folie schon bei der extrem niedrig gewählten ESH-Dosis von 5 kGy für die Höchstzugkraft um 32 % und die Werte für die maximale Reißdehnung um 31 %. Dieses Ausmaß an Schädigung ist für Verpackungsklebebänder nicht tolerierbar.

Hieraus folgt, daß die ESH-Technologie zur Leistungsverbesserung von BOPP-Verpackungsklebebändem aufgrund der auftretenden Schädigung der Polypropylenfolien nicht geeignet ist.

### Beispiel 2

In den Beispielen 2 bis 4 wurden einstufig oder mehrstufig Naturkautschuk-Schmelzhaftkleber derselben Brutto-Rezepturen A.0 und A hergestellt. Rezeptur A.0 war eine vernetzerfreie Vergleichsrezeptur, A enthielt Vernetzer.
Alle Rezepturen sind in phr angegeben, das heißt im Bezug auf 100 Masseteile Naturkautschuk.

Es wurden eingesetzt:
- Naturkautschuk: SVR 5L (zu beziehen bei Fa. Weber Schaer, Hamburg)
- Klebharz: HERCOTAC 205 (Fa. Hercules BV, Rijswijk, NL)
- Füllstoff: Mahlkreide Mikrosöhl 40 (Vereinigte Kreidewerke Dammann KG, Söhlde)
- Weichmacher: paraffinisches Weißöl Shell Ondina G 33 (Deutsche Shell AG, Hamburg)
- Alterungsschutzmittel: Lowinox ® 22M46, ein 2,2-Methylen-bis-[6-(1,1-dimethyl-ethyl)-4-methyl-phenol)] von der Firma GREAT LAKES
- Isocyanatvernetzer: Diphenylmethan 4,4-Diisocyanat-basierte Produkt Suprasec DNR mit ca. 31% NCO-Gruppenanteil, (Fa. ICI Polyurethanes, Löhne)

| Rezeptur A.0 | |
|---|---|
| | phr |
| Naturkautschuk, granuliert | 100,0 |
| Hercotac 205 | 98,0 |
| Kreide | 18,0 |
| Weißöl | 4,0 |
| Alterungsschutzmittel | 2,0 |

| Rezeptur A | |
|---|---|
| | phr |
| Naturkautschuk, granuliert | 100,0 |
| Hercotac 205 | 98,0 |
| Kreide | 18,0 |
| Weißöl | 4,0 |
| Alterungsschutzmittel | 2,0 |
| Suprasec DNR | 0,9 |

Der Naturkautschuk wurde vor seiner Verwendung granuliert, und zwar in einem Granulator der Fa. Pallmann unter Verwendung von geringen Mengen Talkums als Trennmittel.

Die batchweise, wie in den Beispiel 1 und 2, oder kontinuierlich, wie in dem Beispiel 3, hergestellten Naturkautschuk-Schmelzhaftkleber wurden sofort nach ihrer Herstellung unter Verwendung eines biegesteifen 2-Walzenauftragswerks beschichtet. Die Beschichtung des Klebefilms auf die mit üblicher Technologie geprimerte Seite einer 35 µm starken BOPP-Folie (35 µm BOPP Film der Fa. Pao Yan, Taipeh) erfolgte direkt, und zwar in einer Schichtstärke von 20 µm. Zwischen der ersten und der zweiten bahnführenden Beschichtungswalze wurde gemäß der Auftragsdicke ein Beschichtungsspalt eingestellt. Die erste Walze war auf 140 °C temperiert, die bahnführende Walze auf 60 bis 80 °C. Der dem Walzenspalt zugeführte Naturkautschuk-Schmelzhaftkleber wies, je nach Beispiel, eine Temperatur von 70 bis 120 °C auf. Die Beschichtung erfolgte der dem jeweiligen Herstellverfahren angepaßten Bahngeschwindigkeit. Im Falle der kontinuierlichen Masseherstellung in den Beispielen 3 und 4 wurde der Naturkautschuk-Schmelzhaftkleber dem Walzenspalt mittels eines Gurtbandes oder Förderextruders zugeführt.

In einem ersten Verfahrensschritt wurde ein Vorbatch hergestellt. Der Vorbatch wurde nach der als VB-A bezeichneten Rezeptur in einem Banbury-Kneter des Typs GK 1,4 N der Firma Werner & Pfleiderer, Stuttgart, hergestellt.

| Vorbatch-Rezeptur VB-A | |
|---|---|
| | phr |
| Naturkautschuk, granuliert | 100,0 |
| Hercotac 205 | 18,0 |
| Kreide | 18,0 |
| Weißöl | 4,0 |
| Alterungsschutzmittel | 2,0 |

Knetkammer und Rotoren waren auf 25 °C temperiert, die Schaufeldrehzahl betrug 50 min⁻¹. Das Gesamtgewicht des Vorbatches betrug 1,1 kg. Alle Bestandteile wurden trocken vorvermischt und gemeinsam mit dem Weißöl dosiert.

Eine Mischzeit von sechs Minuten war ausreichend für die Homogenisierung der Bestandteile des Vorbatches.

In einem zweiten Verfahrensschritt wurden die Naturkautschuk-Schmelzhaftkleber fertig gemischt. In einer Knetmaschine der Bauart LUK1.0 K3 der Firma Werner & Pfleiderer, Stuttgart, wurden hierzu dem Vorbatch alle weiteren Zuschlagsstoffe zugesetzt, so daß Naturkautschuk-Schmelzhaftkleber entsprechend den Bruttorezepturen A.0 beziehungsweise A resultierten. Der Vorbatch wurde ½ Minute geknetet, dann das gesamte Klebharz gemäß Rezeptur F-A.0 und F-A zugesetzt. Das Isocyanat wurde nach 10 Minuten zugemischt, nach 13 min war die Klebmasse fertig.

| Rezeptur F-A.0 | |
|---|---|
| | phr |
| Vorbatch VB-A | 142 |
| Hercotac 205 | 80 |

| Rezeptur F-A | |
|---|---|
| | phr |
| Vorbatch VB-A | 142 |
| Hercotac 205 | 80 |
| Suprasec DNR | 0,9 |

Die Rezeptur F-A.0 entspricht in Summe der Bruttorezeptur A.0 des Naturkautschuk-Schmelzhaftklebers, Rezeptur F-A entspricht in Summe der Bruttorezeptur A des Naturkautschuk-Schmelzhaftklebers.
Das Gesamtgewicht des Schmelzhaftklebers betrug 500 g. Die Kammertemperatur war während des gesamten Fertigmisch-Vorganges auf 80 °C eingestellt. Die Gesamtknetzeit betrug 10 Minuten.

### Beispiel 3

Beispiel 2 wurde wiederholt.
Für die Vereinfachung des Entleerens wurde im zweiten Verfahrensschritt des Fertigmischens eine Knetmaschine der Bauart VI U 20 L der Firma Aachener Misch- und Knetmaschinen-Fabrik Peter Küpper, Aachen, mit Austragsschnecke benutzt. Der Vorbatch wurde ½ Minute geknetet, dann das gesamte Klebharz gemäß Rezepturen F-A.0 und F.A zugesetzt. Das Isocyanat wurde nach 8 Minuten zugemischt und weitere 4 Minuten fertig geknetet.

Das Gesamtgewicht des Schmelzhaftklebers betrug 12 kg. Die Kammertemperatur wurde auf 80 °C eingestellt. Die Gesamtknetzeit betrug 12 Minuten, die Entleerungszeit 7 Minuten.

### Beispiel 4

Zur Herstellung des Naturkautschuk-Schmelzhaftklebers wurde ein Planetwalzenextruder der Firma ENTEX Rust & Mitschke mit drei Walzenzylindem benutzt. Der Durchmesser der Walzenzylinder betrug 70 mm. Der erste der Anlaufringe war mit radialen Bohrungen versehen, über welche die Flüssigkeiten mittels Dosierpumpen zugeführt wurden. Gravimetrische Dosierer, Dosierpumpen und die Drehzahl der Zentralspindel wurden so eingestellt, daß sich eine Produktrate von 65 kg/h bei homogener Mischung ergab. Die Temperierung der einzelnen Walzenzylinder erfolgte so, daß sich eine Produkttemperatur von 80 °C ergab.

Die nach den Beispielen 2 bis 4 erhaltenen, mit einem Schmelzhaftkleber der Rezeptur A beschichteten Klebebänder weisen sämtlich eine Klebkraft von 3-5 N/cm, und Scherstandzeiten (20N) von > 10 000 Minuten und VZ-Werte von mehr als 1,3 auf, sie sind als Verpackungsklebebänder geeignet.

Zum Vergleich:
Die Vergleichsrezeptur A.0, welche nach Beispiel 2 ohne das Isocyanat hergestellt wurde und prinzipiell ebenfalls für die Verwendung als Verpackungsklebeband geeignet ist, ergab bei vergleichbaren Klebkräften Scherstandzeiten von nur ca. 100 Minuten.

**Tabelle 1**

| Klebtechnische Eigenschaften der vernetzerfreien Rezeptur A.0 | | |
|---|---|---|
| | Lagerung 4 Tage bei Raumtemperatur | Gemäß Meßmethode |
| Schertest 20 N auf Stahl [min] | 97 | PSTC 7 |
| Klebkraft auf Stahl [N/cm] | 3,8 | AFERA 4001 |
| Gelwert | 3,8 | Prüfmethode 4 |
| Quelltest | 0 | Prüfmethode 5 |
| Komplexe Viskosität | 9,07*10⁴ | Prüfmethode 7 |
| bei 0,1 rad/s und 110 °C [Pa*s] | VZ= 1,0 | |

### Beispiel 5

Gemäß dem in Beispiel 2 beschriebenen Verfahren wurde ein Naturkautschuk-Schmelzhaftleber der Rezeptur B für die Anwendung als Abdeckband hergestellt. Neben bereits oben erwähnten Rohstoffen wurden das aliphatische Kohlenwasserstoffharz Escorez 1202 des Herstellers EXXON, Titandioxid KRONOS 2160 des Herstellers KRONOS NL CHEMICALS, INC., Hightstown, N.J. sowie der hochmolekularere Airdried Sheet-Naturkautschuk, zu beziehen bei Weber & Schaer, Hamburg, eingesetzt.
Die Beschichtung des Schmelzhaftklebers erfolgte nach dem oben geschilderten 2-Walzenauftragsverfahren auf einen schwachgekreppten, nach branchenüblichen Verfahren imprägnierten, mit Release- und Primerschicht ausgerüsteten Papierträger mit einer Schichtdicke von 40 µm.

| Rezeptur B | |
|---|---|
| | phr |
| Naturkautschuk, granuliert | 100,0 |
| Hercotac 205 | 61,4 |
| Harz 1202 | 38,6 |
| TiO₂ | 2,3 |
| Kreide | 22,7 |
| Alterungsschutzmittel Lowinox ® 22M46 | 2,3 |

In dem jeweils ersten Verfahrensschritt wurden Vorbatche gemäß dem Verfahren aus Beispiel 2, jedoch mit der Rezeptur VB-B hergestellt. Als Parameter für die Versuchsreihe wurde die Vorbatch-Mischzeit zwischen 1 und 12 min variiert.

| Rezeptur VB-B: | |
|---|---|
| | phr |
| Naturkautschuk, granuliert | 100,0 |
| Harz Hercotac 205 | 18,2 |
| Kreide | 22,7 |
| TiO₂ | 2,3 |
| Alterungsschutzmittel | 2,3 |

In dem in Beispiel 2 beschriebenen Verfahrensschritt 2 wurde jeweils der Restharzanteil gemäß Rezeptur F-B dem Vorbatch im LUK-Kneter hinzugegeben und der Schmelzhaftkleber insgesamt 10 Minuten fertig geknetet.

| Rezeptur F-B | |
|---|---|
| | phr |
| Vorbatch VB-A | 145,5 |
| Hercotac 205 | 43,2 |
| Harz 1202 | 38,6 |

Die in diesem Beispiel erzeugten Klebebänder waren sämtlich für den Einsatz als Abdeckband, allerdings für unterschiedliche Leistungsbereiche geeignet. In Abhängigkeit des Abbaugrades des Naturkautschukes über die Mischzeit des Vorbatches Rezeptur VB-B im ersten Verfahrensschritt konnten die klebtechnischen Eigenschaften des Abdeckbands in einem weiten Bereich beeinflußt werden.

In der Tabelle 2 sind die klebtechnische Kenndaten des Abdeckbands sowie die aus dynamisch-mechanischen Messungen gewonnenen komplexen Viskosität η* des Schmelzhaftklebers vor der Beschichtung gezeigt. Mit zunehmender Mischzeit im ersten Verfahrensschritt nimmt die Kohäsion der Selbstklebemasse ab, was durch abnehmende komplexe Viskosität gemäß Prüfmethode 7 und die sinkenden Schertestwerte des Abdeckbands gemäß Prüfmethode 3 erkennbar ist.

**Tabelle 2**

| Bezeichnungen | ADS 1 | ADS 1-vernetzt | V 1 | V 2 | V4 | V12 | V12-vernetzt |
|---|---|---|---|---|---|---|---|
| Naturkautschuktyp | ADS | ADS | SVR 5L | SVR 5L | SVR 5L | SVR 5L | SVR 5L |
| Vorbatchmischzeit [min] | 1 | 1 | 1 | 2 | 4 | 12 | 12 |
| (Verfahrensschritt 1) | | | | | | | |
| Schertest 10 N auf Stahl | 1506 | > 10⁴ | 645 | 314 | 283 | 140 | 734 |
| [min] | | | | | | | |
| PSTC 7, 10 N Belastung | | | | | | | |
| Klebkraft auf Stahl [N/cm] | 2,6 | 2,4 | 2,9 | 3,5 | 3,6 | 3,7 | 3,5 |
| AFERA 4001 | | | | | | | |
| Komplexe Viskosität η* | 3,26*10⁵ | 6,28*10⁵ | 1,47*10⁵ | 1,16*10⁵ | 9,08*10⁴ | 5,72*10⁴ | 1,25*10⁵ |
| [Pa*s] | | | | | | | |
| (Temperatur T = 110 °C, Frequenz f = 0,1 rad/s), | | VZ= 1,92 | | | | | VZ= 2,37 |
| Prüfmethode 7 | | | | | | | |
| Molmassenmittel M_{w} nach GPC, [g/mol] | 1,01 | n.g. | n.g. | n.g. | n.g. | 0,78 | n.g. |
| Prüfmethode 8 | | | | | | | |
| n.g.: nicht gemessen | | | | | | | |

Die Muster ADS und V1 bis V12 entsprechen sämtlich der Bruttorezeptur B. Die Selbstklebemassen ADS 1 und V12 aus Tabelle 2 wurden gemäß Verfahren aus Beispiel 2 nachträglich mit 0,36 % des Diphenylmethan-4-4'-diisocyanat (Desmodur MC 44/Schuppen des Herstellers BAYER AG, Leverkusen) nachvemetzt und mit "ADS-vernetzt" beziehungsweise "V12-vernetzt" bezeichnet. Die Wirkung der Isocyanatvernetzung des Schmelzhaftklebers ist aus den Werten erkennbar.

Die Beispiele 6 bis 14 demonstrieren die Wirkung der erfindungsgemäß eingesetzten Vernetzer- und Katalysator-Substanzen, welche jeweils der Rezeptur A.0 zugesetzt wurden.

Die eingesetzten Isocyanate und die exakten Rezepturen sind den jeweiligen Beispielen zu entnehmen. Die erzielten besonderen Eigenschaften der hergestellten Schmelzhaftkleber und Selbstklebebänder sind in Tabellenform gezeigt. Die Vernetzerwirkung ist an den Werten der Scherstandzeiten und an den VZ-Werten deutlich abzulesen.

### Beispiel 6

- Verwendetes Isocyanatsystem:: 99%-iges Diphenylmethan-4-4'-Diisocyanat, MDI-Desmodur MC 44/Schuppen des Herstellers Bayer AG, Leverkusen.

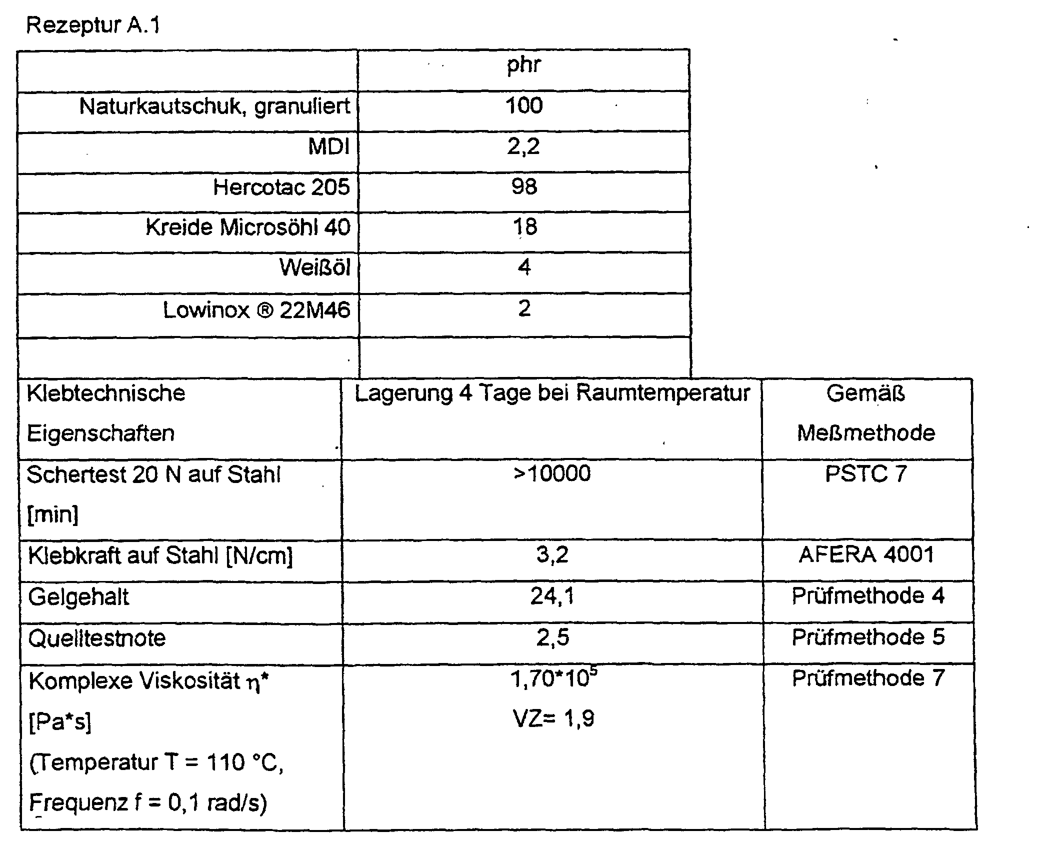

### Beispiel 7

- Verwendetes Isocyanatsystem:: 99%-iges Diphenylmethan-4-4'-Diisocyanat, MDI-Desmodur MC 44/Schuppen des Herstellers Bayer Leverkusen.

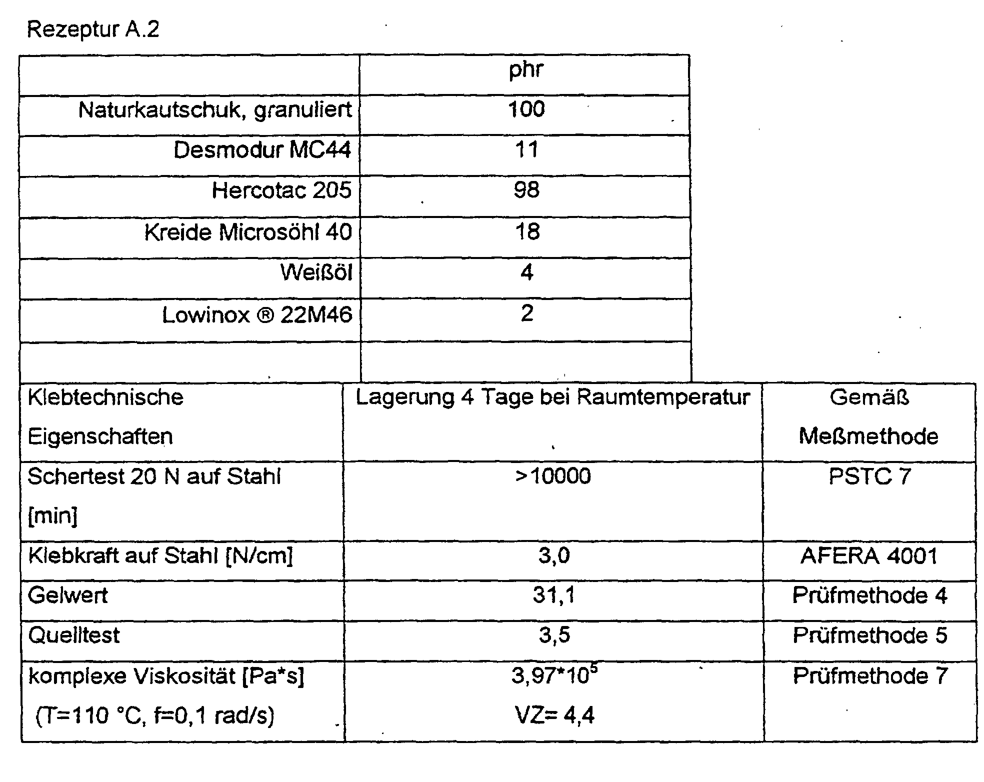

### Beispiel 8

- Verwendetes Isocyanatsystem:: 99%-iges Diphenylmethan-4-4'-Diisocyanat, MDI-Desmodur MC 44/Schuppen des Herstellers Bayer AG, Leverkusen.

Zusätzlich wurde als Vernetzungsbeschleuniger das Dibutylzinndilaurat des Herstellers MERCK/Schuchardt verwendet.

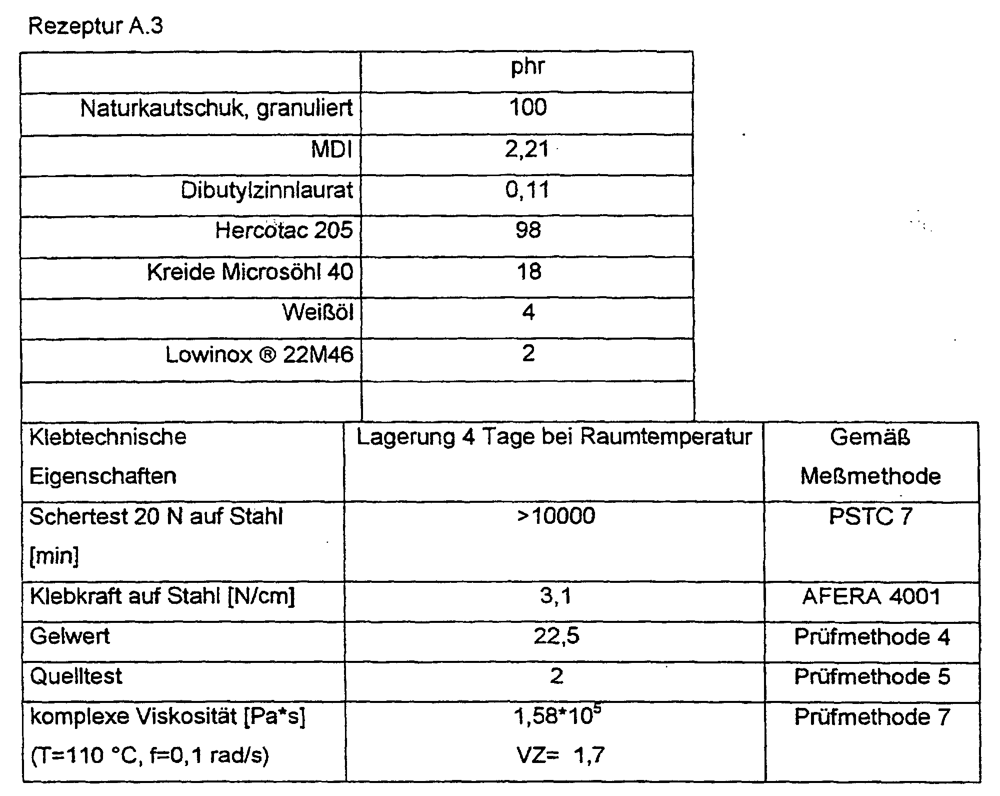

### Beispiel 9

- Verwendetes Isocyanatsystem:: 99%-iges Diphenylmethan-4-4'-Diisocyanat, MDI-Desmodur MC 44/Schuppen des Herstellers Bayer AG, Leverkusen.

Zusätzlich wurde als Vernetzungsbeschleuniger das Dibutylzinndilaurat (DBTL) des Herstellers MERCK/Schuchardt verwendet.

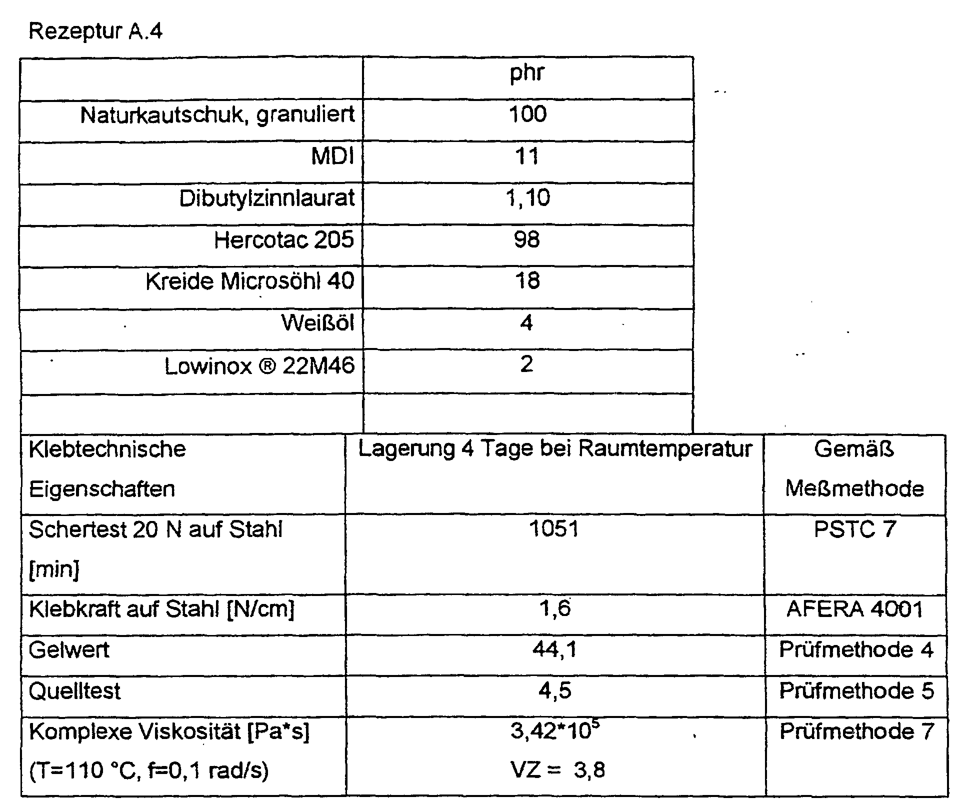

### Beispiel 10

Gezeigt wurde der Einsatz eines dimerisierten Isophorondiisocyanates (Vestanat T 1890/100, Fa. HÜLS, Marl).

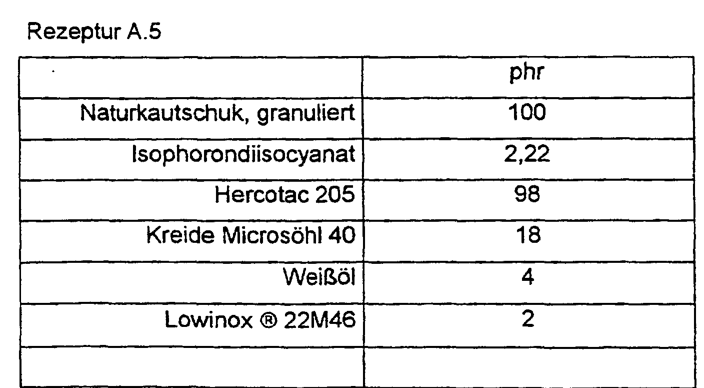

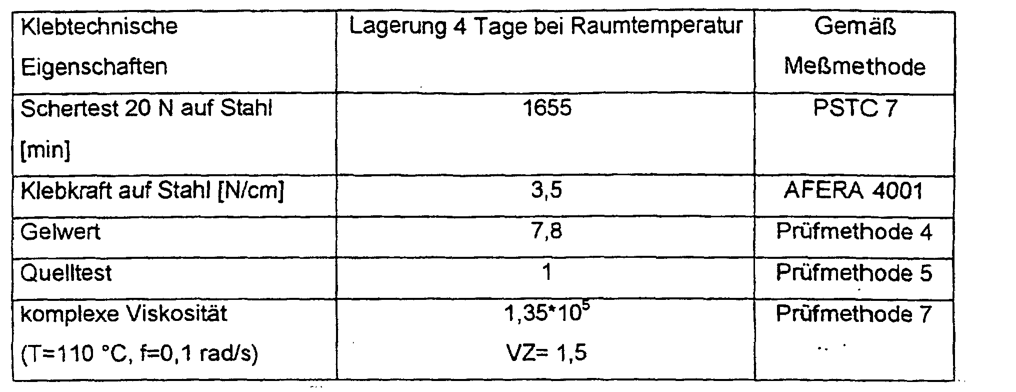

### Beispiel 11

Die Beispiele 11 bis 12 zeigen den Einsatz eines cycloaliphatischen, sterisch gehinderten Isophorondiisocanat (Vestanat IPDI des Herstellers Hüls/Marl).

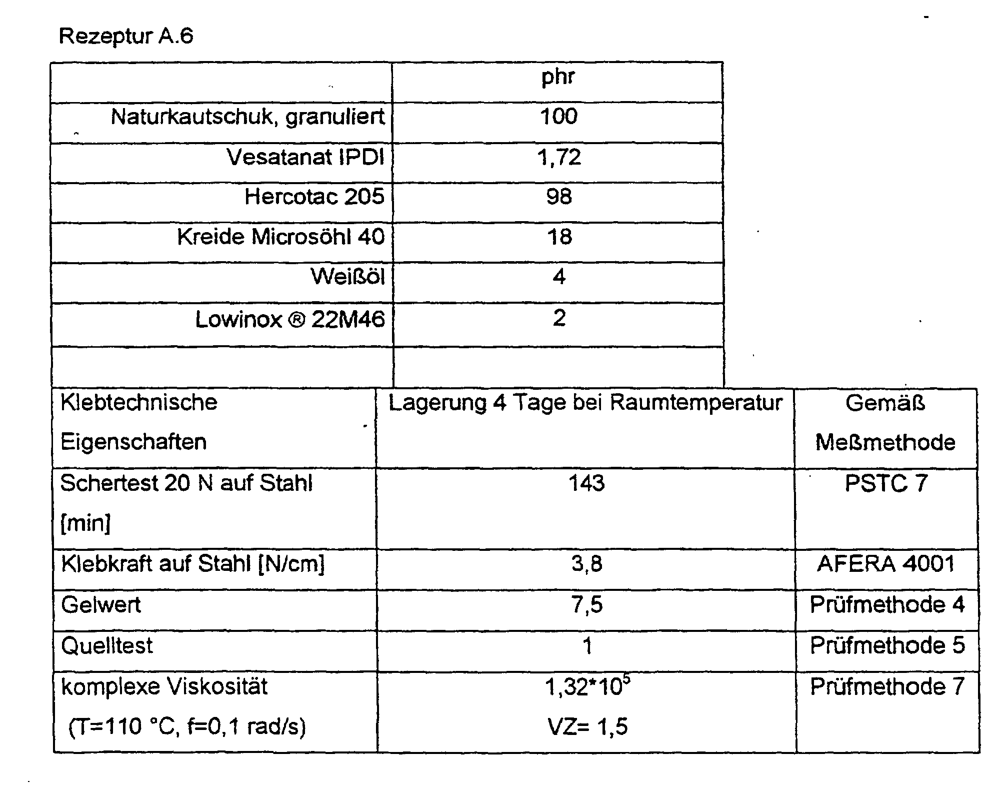

### Beispiel 12

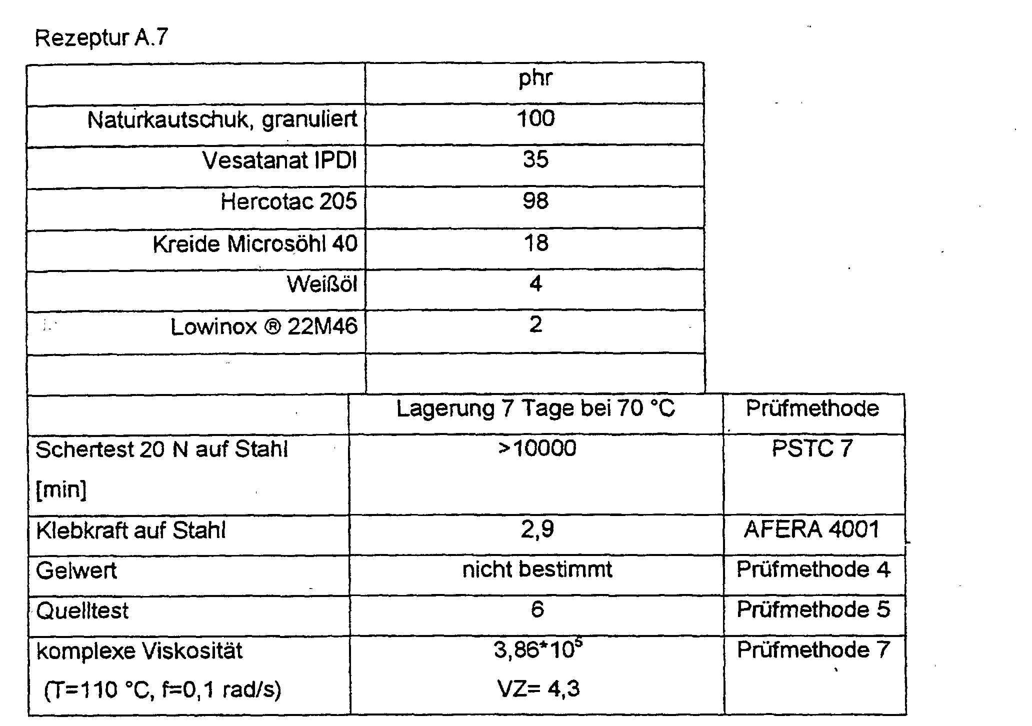

### Beispiel 13

Eingesetzt wurde das aliphatische Isoyanat mit (Desmodur N3200 des Hersteller Bayer AG, Leverkusen).

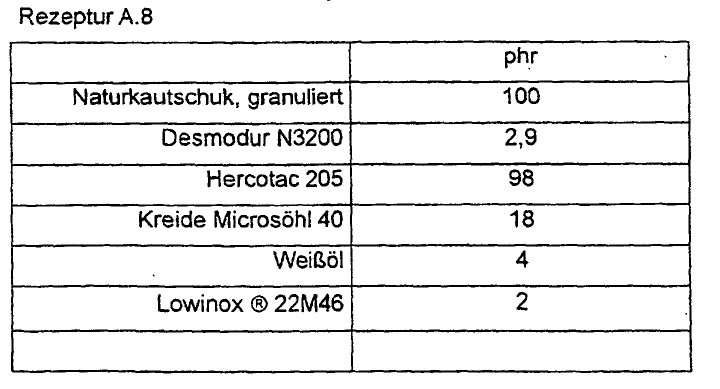

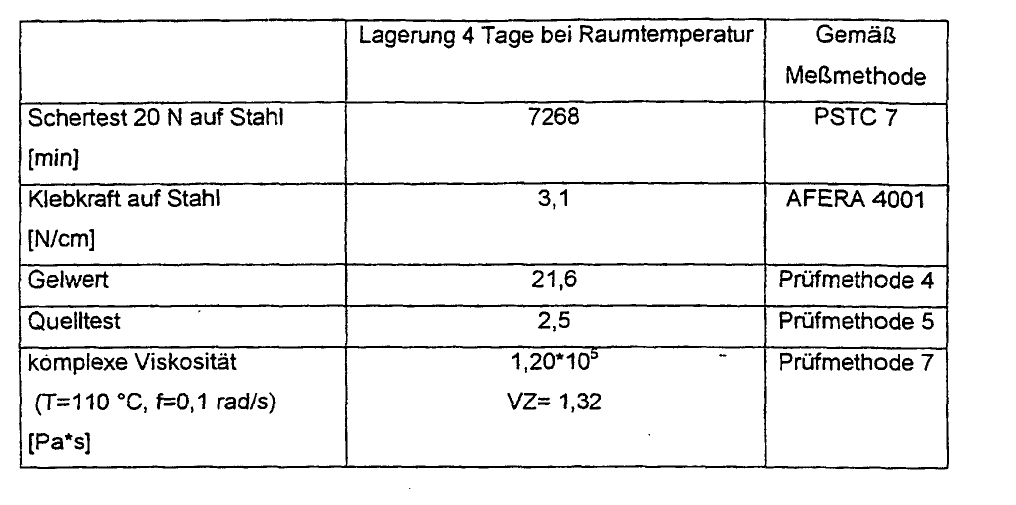

### Beispiel 14

In diesem Beispiel wurden zwei Isocyanatsyssteme eingesetzt:
- Desmodur MC44/Schuppen und
- Vestanat IPDI (Fa. HÜLS, Marl)

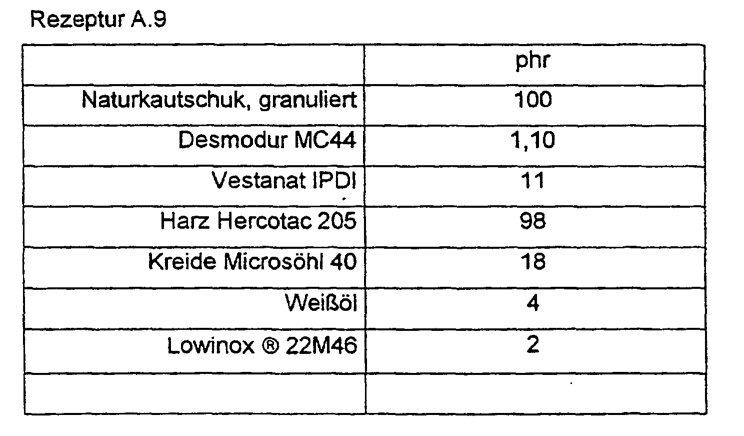

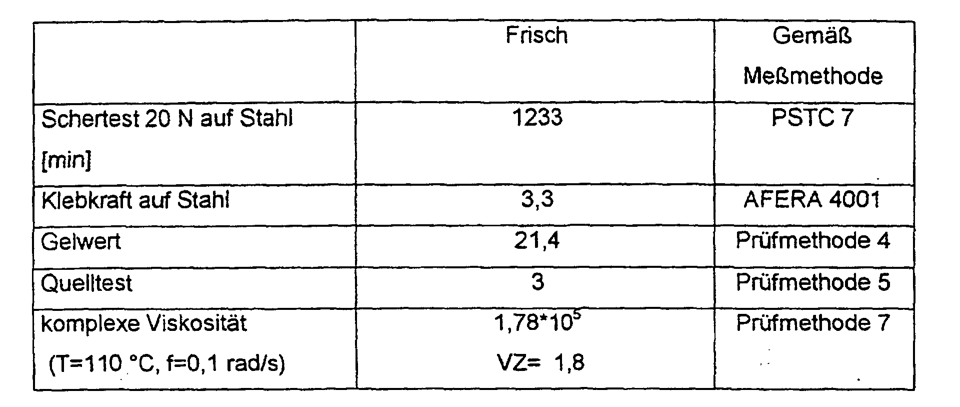

### Beispiel 15

In den Beispielen 15 und 16 kamen synthetische Styrol-Butadien-Kautschuke (SBR) zum Einsatz. In der unvernetzten Basisrezeptur wurde in Beispiel 15 der SBR 1500 der Ameripol Synpol Corporation, Akron, USA, verwendet. In Beispiel 16 wurde als Vemetzer das Isocyanat Desmodur MC 44/Schuppen verwendet.

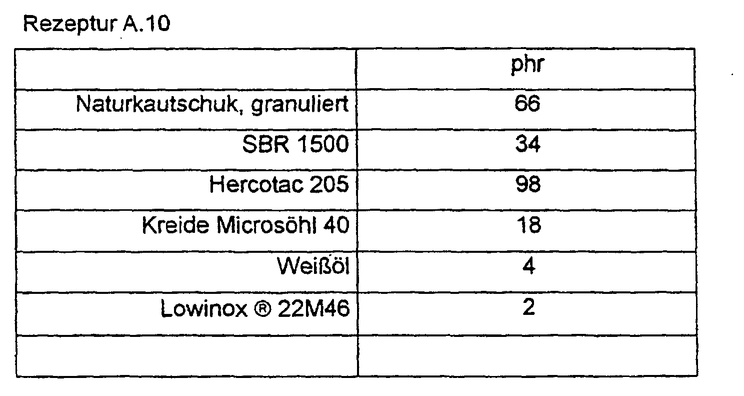

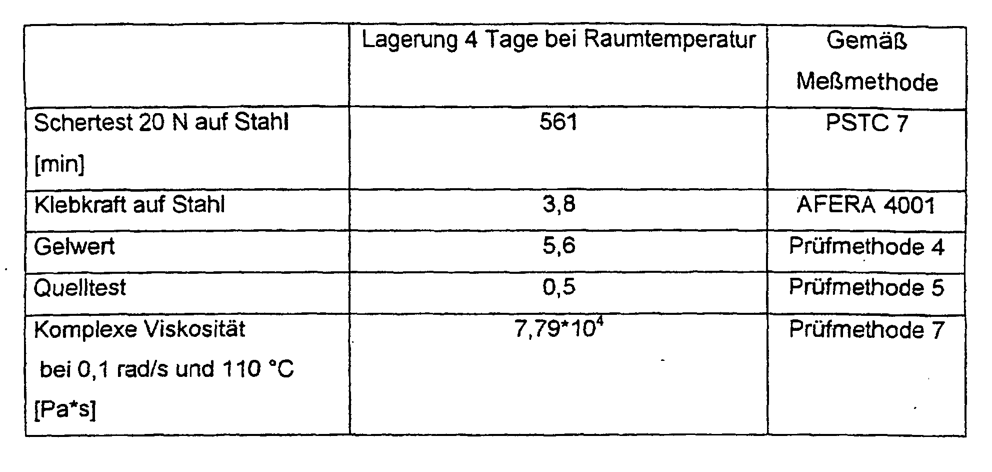

### Beispiel 16

In den Beispielen 15 und 16 kamen synthetische Styrol-Butadien-Kautschuke (SBR) zum Einsatz. In der unvernetzten Basisrezeptur wurde in Beispiel 15 der SBR 1500 der Ameripol Synpol Corporation, Akron, USA verwendet. In Beispiel 16 wurde als Vernetzer das Isocyanat Desmodur MC 44/Schuppen verwendet.

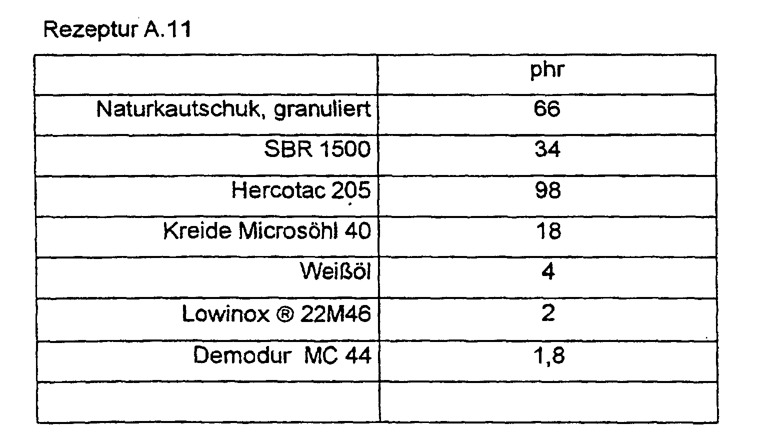

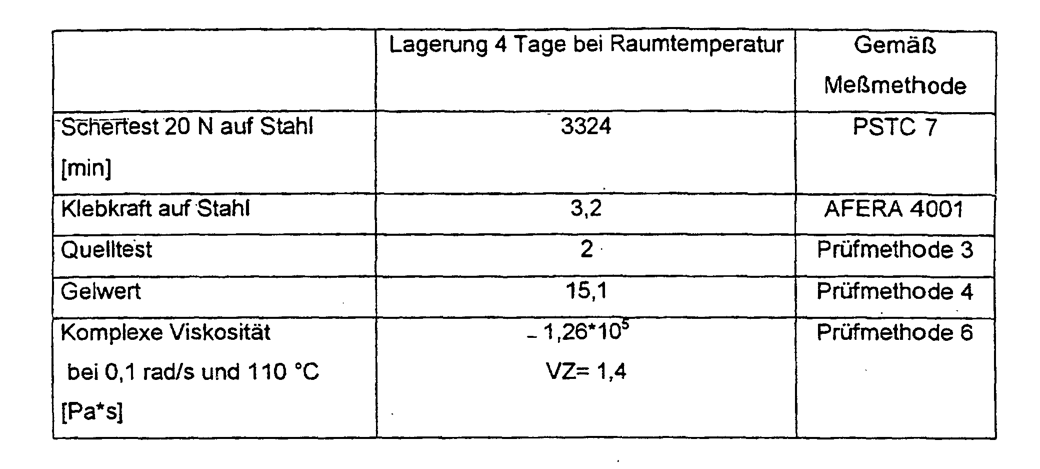

Es wurden Schmelzhaftkleber gefunden, welche bei sehr moderaten nicht trägerschädigenden Temperaturen im Kanal vernetzt werden können.
Im günstigsten Falle bei der Lagerung der Klebeband-Ballen im Produktionsprozeß oder auf der Rolle vernetzen.

## Patentansprüche

1. Verwendung von einem oder mehreren blockierungsmittelfreien polyfunktionellen Isocyanaten zur Herstellung eines Schmelzhaftklebers auf der Basis eines oder mehrerer nicht-thermoplastischer Elastomerer, mindestens bestehend aus
100 Masseteilen des oder der nicht-thermoplastischen Elastomerer,
1 bis 200 Masseteilen eines oder mehrerer klebrigmachender Harze,
wobei der Schmelzhaftkleber 8 Millimol bis 5 mol der reaktiven Isocyanatgruppen des Isocyanates pro Kilogramm des oder der verwendeten nicht-thermoplastischen Elastomeren enthält.

2. Verwendung nach Anspruch 1, **dadurch gekennzeichnet, dass** die nicht-thermoplastischen Elastomere ausgewählt sind aus der Gruppe der
Naturkautschuke, der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Etylen-Vinylacetat-Copolymeren (EVA) und der Polyurethane.

3. Verwendung nach Anspruch 2, **dadurch gekennzeichnet, dass** der Schmelzhaftkleber besteht aus einem Polymerblend von einem oder mehreren der nicht-thermoplastischen Elastomeren und einem oder mehreren thermoplastischen Elastomeren ausgewählt aus der Gruppe, der Polypropylene, der Polyethylene, der Metallocen katalysierten Polyolefinen, der Polyester, der Polystyrolen, und der Blockcopolymeren Synthesekautschuke besteht.

4. Verwendung nach den Ansprüchen 1 bis 3, **dadurch gekennzeichnet, dass** das blockierungsmittelfreie Isocyanat aus einem Gemisch unterschiedlicher Isocyanate besteht, welche sich durch unterschiedliche Reaktivitäten auszeichnen.

5. Verwendung nach den Ansprüchen 1 bis 4, **dadurch gekennzeichnet, dass** die Vernetzung des blockierungsmittelfreien Isocyanats mittels eines Katalysator beschleunigt wird.

6. Verwendung nach Anspruch 1 bis 5, **dadurch gekennzeichnet, dass** dem Schmelzhaftkleber Füllstoffe zugesetzt sind, insbesondere ausgewählt aus der Gruppe der Metalloxide, Kreiden, gefällter oder pyrogener Kieselsäuren, Voll- oder Hohlglaskugeln, der Mikroballons, der Ruße und/oder der Glas- oder der Polymerfasern.

7. Verwendung nach zumindest einem der vorherigen Ansprüche, **dadurch gekennzeichnet, dass** dem Schmelzhaftkleber Weichmacher zugesetzt sind, insbesondere ausgewählt aus der Gruppe der paraffinischen oder naphthenischen Öle, der oligomeren Nitrilkautschuke, der flüssigen Isoprenkautschuke, der Oligobutadiene, der Weichharze, der Wollfette und/oder der Raps- und Rhizinusöle.

## Claims

1. Use of one or more polyfunctional isocyanates, which are free from blocking agent, for the preparation of a hot-melt pressure-sensitive adhesive based one or more non-thermoplastic elastomers, at least comprising
100 parts by mass of the non-thermoplastic elastomer(s),
from 1 to 200 parts by mass of one or more tackifying resins, the hot-melt pressure-sensitive adhesive comprising from 8 mmol to 5 mol of the reactive isocyanate groups of the isocyanate per kilogram of the non-thermoplastic elastomer(s) used.

2. Use according to Claim 1, **characterized in that** the non-thermoplastic elastomers are selected from the group consisting of
natural rubbers, random-copolymerized styrene-butadiene rubbers (SBR), butadiene rubbers (BR), synthetic polyisoprenes (IR), butyl rubbers (IIR), halogenated butyl rubbers (XIIR), ethylene-vinyl acetate copolymers (EVA) and polyurethanes.

3. Use according to Claim 2, **characterized in that** the hot-melt pressure-sensitive adhesive comprises a polymer blend of one or more of the non-thermoplastic elastomers and one or more thermoplastic elastomers selected from the group consisting of polypropylenes, polyethylenes, metallocene-catalysed polyolefins, polyesters, polystyrenes and synthetic block copolymer rubbers.

4. Use according to Claims 1 to 3, **characterized in that** the blocking-agent-free isocyanate comprises a mixture of different isocyanates which are distinguished by different reactivities.

5. Use according to Claims 1 to 4, **characterized in that** the crosslinking of the blocking-agent-free isocyanate is accelerated by means of a catalyst.

6. Use according to Claim 1 to 5, **characterized in that** fillers are added to the adhesive which are selected in particular from the group consisting of metal oxides, chalks, precipitated or pyrogenic silicas, solid or hollow glass beads, microballoons, carbon blacks and/or glass fibres or polymer fibres.

7. Use according to at least one of the previous claims, **characterized in that** plasticizers are added to the adhesive which are selected in particular from the group consisting of paraffinic or naphthenic oils, oligomeric nitrile rubbers, liquid isoprene rubbers, oligobutadienes, soft resins, wool fats and/or rapeseed oils and castor oils.

## Revendications

1. Utilisation d'un ou de plusieurs isocyanates polyfonctionnels exempts d'agent de blocage pour la préparation d'un adhésif à l'état fondu à base d'un ou de plusieurs élastomères non thermoplastiques, constitué de:
- 100 parties en poids du ou des élastomères non thermoplastiques,
- de 1 à 200 parties en poids d'une ou de plusieurs résines d'adhérence,
l'adhésif à l'état fondu contenant de 8 millimoles à 5 moles des groupes réactifs isocyanate de l'isocyanate par kilogramme du ou des élastomères non thermoplastiques utilisés.

2. Utilisation selon la revendication 1, **caractérisée en ce que** les élastomères non thermoplastiques sont sélectionnés dans le groupe constitué des caoutchoucs naturels, des copolymères statistiques de caoutchouc de styrène-butadidène (SBR), des caoutchoucs de butadiène (BR), des polyisoprènes synthétiques (IR), des caoutchoucs butyle (IIR), des caoutchoucs butyle halogénés (XIIR), des copolymères d'éthylène et d'acétate de vinyle (EVA) et des polyuréthanes.

3. Utilisation selon la revendication 2, **caractérisée en ce que** l'adhésif à l'état fondu est constitué d'un mélange de polymères constitué d'un ou de plusieurs des élastomères non thermoplastiques et d'un ou de plusieurs élastomères thermoplastiques sélectionnés dans le groupe constitué des polypropylènes, des polyéthylènes, des polyoléfines catalysées par métallocène, des polyesters, des polystyrènes et des copolymères séquencés de caoutchouc de synthèse.

4. Utilisation selon les revendications 1 à 3, **caractérisée en ce que** l'isocyanate exempt d'agent de blocage est constitué d'un mélange de différents isocyanates qui se distinguent par des réactivités différentes.

5. Utilisation selon les revendications 1 à 4, **caractérisée en ce que** la réticulation de l'isocyanate exempt d'agent de blocage est accélérée au moyen d'un catalyseur.

6. Utilisation selon les revendications 1 à 5, **caractérisée en ce qu'**à l'adhésif à l'état fondu, on ajoute des charges qui sont en particulier sélectionnées dans le groupe constitué des oxydes de métaux, des craies, des acides siliciques précipités ou pyrogènes, des billes de verre pleines ou creuses, des microballons, des suies et/ou des fibres de verre ou polymères.

7. Utilisation selon au moins l'une quelconque des revendications précédentes, **caractérisée en ce qu'**à l'adhésif à l'état fondu, on ajoute des plastifiants qui sont en particulier sélectionnés dans le groupe constitué des huiles paraffiniques ou naphténiques, des caoutchoucs nitrile oligomères, des caoutchoucs d'isoprène liquides, des oligobutadiènes, des résines molles, des suints et/ou de l'huile de colza et de l'huile de ricin.
